# EUROPÄISCHE PATENTANMELDUNG

(11) **EP 3 412 695 A1**
(43) Veröffentlichungstag der Anmeldung: **12.12.2018**
(21) Anmeldenummer: 17174883.3
(22) Anmeldetag: 08.06.2017
(51) Int. Cl.: C08G 18/48, C08G 18/66, C08G 18/76, C08G 18/22, C08G 18/32, C08G 18/40, C08G 18/42, C08G 18/44

(54) **KURZLEBIGE KONSUMGÜTER AUF BASIS VON SPEZIELLEN THERMOPLASTISCHEN POLYURETHANEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft kurzlebige Konsumgüter auf Basis von speziellen thermoplastischen Polyurethanen (TPU), die aus Diisocyanaten, Kettenverlängerern und langkettigen Polyolen hergestellt sind, wobei die Polyole mindestens ein Polyethercarbonatpolyol enthalten, sowie die Verwendung dieser speziellen thermoplastischen Polyurethane zur Herstellung von kurzlebigen Konsumgütern.

## Beschreibung

Die Erfindung betrifft kurzlebige Konsumgüter auf Basis von speziellen thermoplastischen Polyurethanen (TPU), die aus Diisocyanaten, Kettenverlängerern und langkettigen Polyolen hergestellt sind, wobei die Polyole mindestens ein Polyethercarbonatpolyol enthalten, sowie die Verwendung dieser speziellen thermoplastischen Polyurethane zur Herstellung von kurzlebigen Konsumgütern.

Neben den klassischen kurzlebigen Konsumgütern, wie z. B. Verpackungsmaterialien für Nahrungs- und Genussmittel, Arzneimittel, Kosmetik- und Körperpflegemittel sowie Wasch- und Reinigungsmittel, erweisen sich Produkte für den Sport- und Freizeitbereich, insbesondere Bekleidungsprodukte, Schuhe, modische Accessoires, aber auch gewisse elektronische Geräte, wie z. B. Mobiltelefone und Hüllen dafür, Uhren, Fitnesstracker und deren Armbänder, zunehmend als Verbrauchsgüter im klassischen Sinne, weil Faktoren, wie z. B. Mode-, Geschmacks- oder Stiländerungen, aber auch technische Fortschritte deren Nutzungsdauer erheblich verringern. Das Standardkriterium geht von einer Lebensdauer der letztgenannten Produkte von nicht mehr als ca. 3 Jahren aus (siehe dazu Wirtschaftslexikon24.com, Ausgabe 2017: http://www.wirtschaftslexikon24.com/d/kurzlebige-konsumgueter/kurzlebige-konsumgueter.htm).

Daher ist es aus Gründen des Umweltschutzes und des Verbrauchs natürlicher Ressourcen besonders wichtig, gerade für die Herstellung der genannten kurzlebigen Konsumgüter Materialien zu verwenden, die neben einem geeignet hohen Eigenschaftsprofil eine besonders günstige Lebenszyklusanalyse, auch "**L**ife **C**ycle **A**ssessment" (LCA) genannt, aufweisen. Dabei versteht man eine systematische Analyse der Umweltwirkungen von Produkten während des gesamten Lebensweges oder bis zu einem bestimmten Zeitpunkt der Verarbeitung. Zur Analyse gehören sämtliche Umweltwirkungen während der Produktion, der Nutzungsphase und der Entsorgung des Produktes, sowie die damit verbundenen vor- und nachgeschalteten Prozesse (z. B. Herstellung der Roh-, Hilfs- und Betriebsstoffe). Zu den Umweltwirkungen zählt man sämtliche umweltrelevanten Entnahmen aus der Umwelt (z. B. Bodenschätze, wie Erze und Rohöl) sowie die Emissionen in die Umwelt (z. B. Abfälle und Kohlendioxidemissionen).

Aufgabe der vorliegenden Erfindung war es daher, TPU für kurzlebige Konsumgüter zur Verfügung zu stellen, die neben einem guten Eigenschaftsniveau eine Lebenszyklusanalyse "Life Cycle Assessment" (LCA) mit besonders günstigen Werten aufweisen, weil diese Güter vorwiegend kurzlebig sind und deshalb eine besonders gute Umweltverträglichkeit aufweisen sollen. Das bedeutet, dass zur Herstellung der kurzlebigen Konsumgüter vorzugsweise Materialien verwendet werden sollen, die neben einem geeigneten Eigenschaftsprofil auch bioabbaubar, biobasiert oder rezyklierbar sind und deren Herstellung möglichst wenig natürliche Ressourcen in Form von Rohstoffen und Energie verbraucht.

Diese Aufgabe konnte dadurch gelöst werden, dass die Konsumgüter thermoplastische Polyurethane enthalten, welche aus den üblichen Komponenten zur Herstellung von TPU aufgebaut sind, und dabei mindestens ein Polyethercarbonatpolyol enthalten, welches durch Copolymerisation von Alkylenoxiden mit Kohlendioxid in Gegenwart von Doppelmetallcyanid-Katalysatoren (DMC-Katalysatoren) erhältlich ist.

Gegenstand der vorliegenden Erfindung sind daher kurzlebige Konsumgüter, die thermoplastische Polyurethane enthalten, welche aus A) Diisocyanaten, B) Polyolen, C) Kettenverlängerern und gegebenenfalls D) monofunktionellen Kettenabbrechern in Gegenwart von gegebenenfalls E) Katalysatoren, F) Oxidations- und Lichtstabilisatoren und G) Zusatzstoffen und Hilfsmitteln herstellbar sind, wobei die Polyole (B) mindestens ein Polyethercarbonatpolyol enthalten, welches durch Copolymerisation von Alkylenoxiden mit Kohlendioxid unter Zuhilfenahme von Doppelmetallcyanid-Katalysatoren (DMC-Katalysatoren) erhältlich ist.

Bei der Herstellung besagter Polyethercarbonatpolyole wird das Treibhausgas Kohlendioxid als Rohstoff eingesetzt und chemisch eingebaut. Es wird als klimaschädliches Treibhausgas der Umwelt entzogen und trägt als Quelle für die Erzeugung von wertvollen Carbonatgruppen in den Polyethercarbonatpolyolen maßgeblich zu dem hohen Eigenschaftsprofil der daraus erhaltenen thermoplastischen Polyurethane bei.

TPU auf Basis von Polyethercarbonatpolyolen, welche durch Copolymerisation von Alkylenoxiden mit Kohlendioxid unter Zuhilfenahme von Doppelmetallcyanid-Katalysatoren (DMC-Katalysatoren) hergestellt wurden, sind bekannt (DE-A 102012218846 und DE-A 102012218848). Sie zeichnen sich durch ein hohes Gesamteigenschaftsniveau aus, insbesondere durch eine sehr gute Hydrolysebeständigkeit, gute Chemikalienbeständigkeit, hohe Abrieb- und Verschleißfestigkeiten sowie ein hohes mechanisches Eigenschaftsniveau. Dadurch erreichen sie ein höheres Gesamteigenschaftsniveau als entsprechende TPU auf Basis von Polyetherpolyolen, die durch Polymerisation von Alkylenoxiden hergestellt wurden. Aufgrund der sehr guten Hydrolysebeständigkeit ergeben sich auch Vorteile im Vergleich zu TPU auf Basis von Polyesterpolyolen. Das Eigenschaftsniveau von TPU auf Basis von C4-Ethern, Polycarbonatdiolen oder Caprolactondiolen liegt zwar auf einem ähnlich hohen Niveau wie das der TPU auf Basis von Polyethercarbonatdiolen, allerdings sind die LCA-Werte dieser TPU deutlich ungünstiger als die LCA-Werte der TPU auf Basis von Polyethercarbonatdiolen, welche durch Copolymerisation von Alkylenoxiden mit Kohlendioxid unter Zuhilfenahme von Doppelmetallcyanid-Katalysatoren (DMC-Katalysatoren) hergestellt sind.

TPU werden zumeist aus linearen Polyolen (Makrodiolen), wie z. B. Polyester-, Polyether-, Polyethercarbonat-, Polycaprolacton- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastischen Polyurethane kann entweder schrittweise (Prepolymerdosierverfahren) oder durch gleichzeitige Reaktion aller Reaktivkomponenten (one-shot-Dosierverfahren) erfolgen.

Die TPU, die für die Herstellung der erfindungsgemäßen kurzlebigen Konsumgüter bevorzugt eingesetzt werden, sind erhältlich aus der Reaktion
A) mindestens einer Isocyanatkomponente ausgewählt aus der Gruppe bestehend aus aliphatischen, cycloaliphatischen und aromatischen Diisocyanaten,
B) mindestens einer Polyolkomponente bestehend aus
   b1) 100 bis 5 Mol-% mindestens eines Polyethercarbonatdiols mit einem zahlenmittleren Molekulargewicht von 500 bis 6000 g/mol, erhältlich durch Copolymerisation von Alkylenoxiden mit Kohlendioxid in Gegenwart von Doppelmetallcyanid-Katalysatoren (DMC-Katalysatoren),
   b2) 0 bis 95 Mol-% mindestens eines Polyols ausgewählt aus der Gruppe bestehend aus Polyester-, Polyether-, Polycaprolacton- und Polycarbonatdiolen mit zahlenmittleren Molekulargewichten von 500 bis 8000 g/mol,
C) mindestens einer Kettenverlängererkomponente ausgewählt aus der Gruppe bestehend aus kurzkettigen Diolen, Hydroxyaminen und Diaminen mit zahlenmittleren Molekulargewichten von 62 bis 490 g/mol,
D) gegebenenfalls monofunktionellen Kettenabbrechern,
   in Gegenwart von
E) gegebenenfalls Katalysatoren,
F) gegebenenfalls Oxidations- und/oder Lichtstabilisatoren,
G) gegebenenfalls weiteren Zusatzmitteln und/oder Hilfsstoffen,
wobei das Verhältnis der Isocyanatgruppen aus A) zu den gegenüber Isocyanatengruppen reaktiven Gruppen aus B), C) und D) 0,9:1 bis 1,1:1 beträgt.

Ein weiterer Gegenstand der vorliegenden Erfindung ist die Verwendung von thermoplastischen Polyurethanen, welche aus A) Diisocyanaten, B) Polyolen, C) Kettenverlängerern und gegebenenfalls D) monofunktionellen Kettenabbrechern in Gegenwart von gegebenenfalls E) Katalysatoren, F) Oxidations- und Lichtstabilisatoren und G) Zusatzstoffen und Hilfsmitteln herstellbar sind, wobei die Polyole (B) mindestens ein Polyethercarbonatpolyol enthalten, welches durch Copolymerisation von Alkylenoxiden mit Kohlendioxid in Gegenwart von Doppelmetallcyanid-Katalysatoren (DMC-Katalysatoren) erhältlich ist, zur Herstellung von kurzlebigen Konsumgütern.

Besonders bevorzugt werden als thermoplastische Polyurethane zur Herstellung der kurzlebigen Konsumgütern solche verwendet, die erhältlich sind aus der Reaktion
A) mindestens einer Isocyanatkomponente ausgewählt aus der Gruppe bestehend aus aliphatischen, cycloaliphatischen und aromatischen Diisocyanaten,
B) mindestens einer Polyolkomponente bestehend aus
   b1) 100 bis 5 Mol-% mindestens eines Polyethercarbonatdiols mit einem zahlenmittleren Molekulargewicht von 500 bis 6000 g/mol, erhältlich durch Copolymerisation von Alkylenoxiden mit Kohlendioxid in Gegenwart von Doppelmetallcyanid-Katalysatoren (DMC-Katalysatoren),
   b2) 0 bis 95 Mol-% mindestens eines Polyols ausgewählt aus der Gruppe bestehend aus Polyester-, Polyether-, Polycaprolacton- und Polycarbonatdiolen mit zahlenmittleren Molekulargewichten von 500 bis 8000 g/mol,
C) mindestens einer Kettenverlängererkomponente ausgewählt aus der Gruppe bestehend aus kurzkettigen Diolen, Hydroxyaminen und Diaminen mit zahlenmittleren Molekulargewichten von 62 bis 490 g/mol,
D) gegebenenfalls monofunktionellen Kettenabbrechern,
   in Gegenwart von
E) gegebenenfalls Katalysatoren,
F) gegebenenfalls Oxidations- und/oder Lichtstabilisatoren,
G) gegebenenfalls weiteren Zusatzmitteln und/oder Hilfsstoffen,
wobei das Verhältnis der Isocyanatgruppen aus A) zu den gegenüber Isocyanatengruppen reaktiven Gruppen aus B), C) und D) 0,9:1 bis 1,1:1 beträgt.

Als organische **Diisocyanate A)** kommen beispielsweise Diisocyanate in Betracht, wie sie in Justus Liebigs Annalen der Chemie, 562, S.75-136 beschrieben werden.

Im Einzelnen seien beispielhaft genannt:

Aliphatische und cycloaliphatische Diisocyanate, beispielsweise 1,6-Diisocyanatohexan, 1,8-Diisocyanatooctan, 1,10-Diisocyanatodecan, Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische und 4,4'-, 2,4'- und 2,2'-Dicyclohexylmethandiisocyanat sowie die entsprechenden Isomerengemische. Vorzugsweise verwendet wird als aliphatisches Diisocyanat 1,6-Diisocyanatohexan.

Aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden als aromatische organische Diisocyanate Diphenylmethandiisocyanat-Isomerengemische mit einem 4,4'-Diphenylmethandiisocyanatgehalt von >96 Gew.-% und insbesondere 4,4'-Diphenylmethandiisocyanat.

Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweiseTriphenylmethan-4,4',4"-triisocyanat oder Polyphenylpoly methylenpolyisocyanaten.

Bevorzugt besteht das eingesetzte organische Diisocyanat A) aus 1,6-Diisocyanatohexan, 4,4'-Diphenylmethandiisocyanat, 4,4'-Dicyclohexylmethandiisocyanat oder Gemischen dieser Diisocyanate.

Als **Komponente b1)** kommen lineare Polyethercarbonatdiole mit einem zahlenmittleren Molekulargewicht Mₙ von 500 bis 6000 g/mol, vorzugsweise 650 bis 4000 g/mol und besonders bevorzugt 800 bis 3000 g/mol zum Einsatz, wobei mindestens ein Polyethercarbonatpolyol durch Copolymerisation von Alkylenoxiden mit Kohlendioxid unter Zuhilfenahme von Doppelmetallcyanid-Katalysatoren (DMC-Katalysatoren) hergestellt ist.

Polyethercarbonatdiole können beispielsweise auch durch Umsetzung von kurzkettigen Polyetherdiolen, wie z. B. Polytetrahydrofuranen, Diethylenglykol, Triethylenglykol, Dipropylenglykol, Tripropylenglykol, Polyethylenglykolen und Polypropylenglykolen mit Molekulargewichten von 106 bis 1000 g/mol mit Diphenyl- oder Dimethylcarbonat unter Zuhilfenahme von Katalysatoren und Abspaltung von Phenol oder Methanol hergestellt werden.

Als **Komponente b2)** kommen gegebenenfalls Polyester-, Polyether-, Polycaprolacton- oder Polycarbonatdiole mit einem zahlenmittleren Molekulargewicht von 500 bis 8000 g/mol zum Einsatz. Vorzugsweise werden diese Polyole in Mengen von 0 bis 90 Mol-%, besonders bevorzugt 0 bis 80 Mol-%, bezogen auf die Menge an Polykomponente B) eingesetzt

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mₙ von 500 bis 8000 g/mol, vorzugsweise 750 bis 6000 g/mol und ganz besonders bevorzugt 1000 bis 4200 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Maleinsäure, Glutarsäure, Adipinsäure, Korksäure, Azelainsäure, Sebacinsäure und Dodecandisäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie Ethylenglykol, Diethylenglykol, 1,4-Butandiol, 1,5-Pentandiol, 1,6-Hexandiol, 1,8-Octandiol, 1,10-Decandiol, 1,12-Dodecandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von cyclischen Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole besitzen ein zahlenmittleres Molekulargewicht Mₙ von 500 bis 8000 g/mol, vorzugsweise 600 bis 6000 g/mol und besonders bevorzugt 800 bis 3000 g/mol und können einzeln oder in Form von Mischungen untereinander zur Anwendung kommen.

Geeignete Polycarbonatdiole können beispielsweise hergestellt werden durch Umsetzung von kurzkettigen Diolen, wie z. B. 1,4-Butandiol oder 1,6-Hexandiol mit Diphenylcarbonat oder Dimethylcarbonat unter Zuhilfenahme von Katalysatoren und Abspaltung von Phenol oder Methanol.

Alle oben genannten Polyole können zusätzlich auch an den jeweiligen OH-Gruppen mit ε-Caprolacton umgesetzt sein.

Alle oben genannten Polyole können zusätzlich auch an den jeweiligen OH-Gruppen auch mit Ethylenoxid umgesetzt sein.

Als **Kettenverlängerer C)** können niedermolekulare Verbindungen mit einem Molekulargewicht von ≥ 60 und ≤ 490 g/mol, bevorzugt ≥ 62 und ≤ 400 g/mol und besonders bevorzugt ≤ 62 und ≤ 300 g/mol eingesetzt werden, die zwei Isocyanat-reaktive Gruppen aufweisen.

In einer bevorzugten Ausführungsform der Erfindung bestehen die Kettenverlängerer C) aus Diolen, Diaminen oder aus Gemischen aus Diolen und Diaminen, jedoch bevorzugt aus Diolen.

Geeignete Kettenverlängerer sind Diole wie beispielsweise Ethandiol, 1,3-Propandiol, 1,4-Butandiol, 1,5-Pentandiol, 1,6-Hexandiol, 1,8-Octandiol, 1,10-Decandiol, 1,12-Dodecandiol, Diethylenglykol, Dipropylenglykol, Neopentylglykol, Diester der Terephthalsäure mit Glykolen mit 2 bis 4 Kohlenstoffatomen, wie beispielsweise Terephthalsäure-bis-ethylenglykol oder Terephthalsäure-bis-1,4-butandiol, Hydroxyalkylenether des Hydrochinons, wie beispielsweise 1,4-Di(-hydroxyethyl)-hydrochinon und ethoxylierte Bisphenole.

Bevozugte Kettenverlängerer sind aliphatische Diole mit 2 bis 14 Kohlenstoffatomen, wie beispielsweise Ethandiol, 1,3-Propandiol, 1,4-Butandiol 1,5-Pentandiol, 1,6-Hexandiol, 1,8-Octandiol, 1,10-Decandiol, 1,12-Dodecandiol, Diethylenglykol, Dipropylenglykol, Neopentylglykol und 1,4-Di(-hydroxyethyl)-hydrochinon. Besonders bevorzugt werden Ethandiol, 1,3-Propandiol, 1,4-Butandiol, 1,6-Hexandiol und 1,4-Di(-hydroxyethyl)-hydrochinon als Kettenverlängerer eingesetzt.

Geeignete Kettenverlängerer sind auch (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethyl-ethylendiamin und aromatische Diamine, wie z.B. 2,4-Toluylendiamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Daneben können auch kleinere Mengen an Triolen zugesetzt werden.

Geeignete **Kettenabbrecher D)** sind beispielsweise monofunktionlle Substanzen, die mit Isocyanatgruppen reagieren können, wie Alkohole oder Amine, wobei Alkohole bevorzugt sind. Genannt seien z. B. 1-Butanol, 1-Hexanol, 1-Octanol und Stearylalkohol.

Geeignete **Katalysatoren E)** zur Herstellung der TPU sind die gemäß dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)ethanol, Diazabicyclo[2,2,2]octan sowie organische Metallverbindungen, wie Titansäureester, Eisenverbindungen oder Zinnverbindungen, wie beispielsweise Zinndiacetat, Zinndioctoat, Zinndilaurat oder die Zinndialkylsalze aliphatischer Carbonsäuren, wie beispielsweise Dibutylzinndiacetat oder Dibutylzinndilaurat. Bevorzugte Katalysatoren sind organische Metallverbindungen, insbesondere Titansäureester oder Eisen- und Zinnverbindungen.

Die Gesamtmenge an Katalysatoren bezogen auf das TPU beträgt in der Regel etwa 0 bis 5 Gew.-%, vorzugsweise 0,0001 bis 2 Gew.-% und besonders bevorzugt 0,0002 bis 1,0 Gew.-%.

Geeignete **Oxidationsstabilisatoren F)** sind beispielsweise organische Verbindungen mit sterisch gehinderten phenolischen Gruppierungen, wie z. B. Irganox^{®} 1010 oder Irganox^{®} 245 (Handelsprodukte der BASF SE) aber auch organische Phosphorverbindungen mit dreiwertigem Phosphor, wie z. B. Triphenylphosphin und Triphenylphosphit.

Geeignete **Lichtschutzmittel F)** sind beispielsweise UV-Absorber, wie z. B. Benzophenone, Benzotriazole, Oxanilide oder Phenyltriazine, aber auch sogenannte HALS-Verbindungen (**H**indered **A**mine **L**ight **S**tabilizer), beispielsweise 2,2,6,6-Tetramethylpiperidin-Derivate, wie Tinuvin^{®} 622, Tinuvin^{®} 765 und Chimassorb^{®} 2020 (Handelsprodukte der BASF SE).

Geeignete **Zusatzmittel und Hilfsstoffe G**) sind beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe, wie z. B. anorganische Fasern, die nach dem Stand der Technik hergestellt werden und auch mit einer Schlichte beaufschlagt sein können. In einer besonderen Ausführungsform der Erfindung können OH-funktionelle Siliconverbindungen, wie z. B. OH-funktionelle Polydimethylsiloxane, als Komponente C) in einer Menge von bis zu 30 Mol.-%, bezogen auf die Menge an Polycarbonatdiol B), eingesetzt werden. Nähere Angaben über die genannten Hilfs- und Zusatzstoffe sind der Fachliteratur, beispielsweise der Monographie von J.H. Saunder s und K. C. Frisch "High Polymeres", Band XVI, Polyurethane, Teil 1 und 2, Verlag Interscience Publishers 1962 bzw. 1964*,* dem Taschenbuch für Kunststoff-Additive von R. Gächter und H. Müller (Hanser Verlag München 1990) oder der DE 29 01 774 A zu entnehmen.

Die Zugabe der Komponenten F) und G) kann während des Herstellprozesses der TPU und/oder bei einem nachfolgenden Compoundierschritt erfolgen.

Kurzlebige Konsumgüter bedeuten in dieser Anmeldung z. B. Verpackungsmaterialien für Nahrungs- und Genussmittel, Arzneimittel, Kosmetik- und Körperpflegemittel sowie Wasch- und Reinigungsmittel. Auch Produkte für den Sport- und Freizeitbereich, insbesondere Bekleidungsprodukte, Schuhe, modische Accessoires, sowie gewisse elektronische Geräte, wie z. B. Mobiltelefone und Hüllen dafür, Uhren, Fitnesstracker und deren Armbänder sind kurzlebige Konsumgüter.

Die Erfindung soll anhand der nachfolgenden Beispiele näher erläutert werden.

### Beispiele:

Im Folgenden verwendete Abkürzungen:

**Polyole:**

| | |
|---|---|
| Desmophen^{®} C2201: | Polycarbonatdiol der Covestro AG mit einer OH-Zahl von 56 mg KOH/g |
| T1000: | Polytetrahydrofuran der BASF SE mit einer OH-Zahl von 112 mg KOH/g |
| PE225B: | Polybutylenadipat mit einer OH-Zahl von 50 mg KOH/g |
| BA1000: | Polybutylenadipat mit einer OH-Zahl von 112 mg KOH/g |
| BA2000: | Polybutylenadipat mit einer OH-Zahl von 56 mg KOH/g |
| Acclaim^{®} 2200N: | Polypropylenglykol der Covestro AG mit einer OH-Zahl von 56 mg KOH/g |
| Cardyon^{®} LC06: | Polyethercarbonat der Covestro AG auf Basis von Propylenoxid und CO₂, mittels DMC-Katalysator hergestellt, OH-Zahl 56 mg KOH/g |

**Diisocyanate:**

| | |
|---|---|
| MDI: | 4,4'-Diphenylmethandiisocyanat |

**Kettenverlängerer:**

| | |
|---|---|
| HDO: | 1,6-Hexandiol |
| BDO: | 1,4-Butandiol |

**Katalysatoren:**

| | |
|---|---|
| Tyzor^{®} AA105: | Titankatalysator von Dorf Ketal |
| Desmorapid^{®} SO: | Zinn-II-octoat |

**Additive und Hilfsmittel:**

| | |
|---|---|
| Irganox^{®} 1010: | Antioxidant der BASF SE |
| Tinuvin^{®} 234: | Lichtstabilisator der BASF SE |
| Tinuvin^{®} 622: | Lichtstabilisator der BASF SE |
| Stabaxol^{®} I: | Hydrolyseschutzmittel der Rhein Chemie GmbH |

### Allgemeine Beschreibung der Herstellung der TPUs:

Ein Gemisch aus dem jeweiligen Poyol bzw. Polyolgemisch (im Falle von Polyesterpolyolen wurde dem Polyol noch 1 Gew% Stabaxol I vor Versuchsbeginn zugesetzt), Irganox 1010 (0,25% Gew.-% bezogen auf TPU), Tinuvin 234 (0,5 Gew.-% bezogen auf TPU), Tinuvin 622 (0,3 Gew.-% bezogen auf TPU) und 100 ppm Desmorapid SO bzw. 20 ppm Tyzor AA105 (jeweils bezogen auf die Polyolmenge) wurden unter Rühren auf 190 °C erwärmt. Danach wurde auf 60 °C vorgewärmtes MDI in einer Portion zugegeben. Anschließend wurde 30 Sekunden lang gerührt. Danach wurde der Kettenverlängerer zugegeben und anschließend bis zum maximal möglichen Viskositätsanstieg gerührt und das TPU dann ausgegossen. Das Material wurde danach 30 Minuten bei 80 °C thermisch nachbehandelt. Dann wurde es auf Raumtemperatur abgekühlt. Die molaren Zusammensetzungen der hergestellten TPU sind in der Tabelle 1 aufgeführt.

Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm³/s zu runden Formkörpern (Formtemperatur: 40°C; Größe: Durchmesser 30 mm, Höhe 6mm) bzw. Platten (Formtemperatur: 40°C; Größe: 125 x 50 x 2 mm) verarbeitet.

Von den hergestellten TPU Produkten wurden die mechanischen Werte (100% Modul, 300%-Modul, Reißfestigkeit, Reißdehnung und Shore A Härte), die Verfestigungsgeschwindigkeit und die Auswirkung auf die Klimaveränderung aufgrund der chemischen Zusammensetzung ermittelt.

### Testbedingungen:

### 1) Härte:

Die Messung der Härte erfolgte nach DIN 53505.

### 2) Zugversuch:

Der Zugversuch erfolgte an S1-Stäben (entspricht Prüfkörper Typ 5 nach EN ISO 527, ausgestanzt aus Spritzplatten) gemäß DIN 53455 mit einer Zuggeschwindigkeit von 200 mm/min.

### 3) Verfestigungsgeschwindigkeit:

Zur Ermittlung der Verfestigungsgeschwindigkeit wurde die Härteentwicklung von runden Formkörpern (Durchmesser 30 mm, Höhe 6 mm) nach der Spritzgießverarbeitung (Einstellung der Spritzgießmaschine: 25 s Kühlzeit und 25 s Nachdruckzeit) gemessen. Dabei wurde die Härte der Prüfkörper nach DIN 53505 sofort nach der Entnahme aus der Form (0 s), nach 60 s und nach 300 s gemessen.

### 4) Auswirkungen der einzelnen TPU mit ihrer chemischen Zusammensetzung auf die Klimaveränderung

Zur Ermittlung der Auswirkungen der einzelnen TPU mit ihrer jeweiligen chemischen Zusammensetzung auf die Klimaveränderungen wurden die Daten der eingesetzten Rohstoffe von einem externen Gutachter gemäß der internationalen Standards ISO 14040:2006 und ISO 14044:2006 bewertet. Das Ergebnis für jedes einzelne TPU wird in der Einheit [kg CO₂-eq/kg TPU] dargestellt und erlaubt einen Vergleich der TPU hinsichtlich ihrer Auswirkung auf die Klimaveränderung. Je kleiner der angegebene Zahlenwert ist, desto günstiger ist die Auswirkung auf die Klimaveränderung.

Die jeweils ermittelten Daten und Werte sind in der Tabelle 2 dargestellt.

**Tabelle 1: Molare Zusammensetzung der hergestellten TPU**

| Bespiel | PE225B | Acclaim 2200N | T1000 | BA1000 | BA 2000 | C2201 | Cardyon LC06 | BDO | HDO | MDI | Katalysator |
|---|---|---|---|---|---|---|---|---|---|---|---|
| 1* | 0,5 | | | | | 0,50 | | 5,27 | | 6,27 | Tyzor AA105 |
| 2 | 0,5 | | | | | | 0,50 | 3,96 | | 4,96 | Tyzor AA105 |
| 3* | | | | 0,50 | 0,50 | | | 4,20 | | 5,20 | Tyzor AA105 |
| 4 | | 0,35 | | | | | 0,65 | 4,77 | | 5,77 | Tyzor AA105 |
| 5* | | 1,00 | | | | | | 2,80 | 0,25 | 4,05 | Tyzor AA105 |
| 6* | | | 1,00 | | | | | 1,40 | | 2,40 | Desmor. SO |
| 7* | | 0,50 | | | | 0,50 | | 2,70 | 0,25 | 3,95 | Tyzor AA105 |
| 8 | | 0,50 | | | | | 0,50 | 2,70 | 0,25 | 3,95 | Tyzor AA105 |

| | | | | | | | | | | | |
|---|---|---|---|---|---|---|---|---|---|---|---|
| *nicht erfindungsgemäß | | | | | | | | | | | |

**Tabelle 2: Eigenschaften der hergestellten TPU und deren Auswirkung auf Klimaveränderungen**

| Beispiel | Harte | 100%-Modul | 300%-Modul | Reißfestigkeit | Reißdehnung | Verfestigungsgeschwindigkeit Shore A Härte nach | | | Auswirkung auf Klimaveränderung |
|---|---|---|---|---|---|---|---|---|---|
| | [Shore A] | [MPa] | [MPa] | [MPa] | [%] | 0 Sekunden | 60 Sekunden | 300 Sekunden | [kg CO₂-eq/kg TPU] |
| 1* | 95 | 13,8 | 27 | 47,3 | 498 | 91 | 93 | 95 | 6,3 |
| 2 | 93 | 10,0 | 18,1 | 44,4 | 479 | 79 | 85 | 89 | 3,9 |
| 3* | 95 | 12,6 | 32,1 | 52,5 | 448 | 74 | 88 | 92 | 5,4 |
| 4 | 94 | 16,7 | 25,6 | 31,5 | 408 | 82 | 89 | 90 | 3,3 |
| 5* | 84 | 6,0 | 10,4 | 30,5 | 687 | 26 | 48 | 82 | 3,5 |
| 6* | 86 | 6,5 | 10,8 | 37,6 | 678 | 31 | 65 | 79 | 6,2 |
| 7* | 85 | 7,0 | 11,3 | 29,3 | 654 | 23 | 54 | 85 | 6,0 |
| 8 | 85 | 7,0 | 11,9 | 40,2 | 673 | 25 | 46 | 82 | 3,5 |

| | | | | | | | | | |
|---|---|---|---|---|---|---|---|---|---|
| *nicht erfindungsgemäß | | | | | | | | | |

### Diskussion der Ergebnisse:

Die TPU der Beispiele 1 bis 4 mit einer Shore A Härte von ca. 94 sind aufgrund der schnellen Verfestigungsgeschwindigkeit besonders geeignet für Spritzgießanwendungen. Die TPU haben ein gutes mechanisches Eigenschaftsniveau, das besonders für die Anwendung in kurzlebigen Konsumgütern völlig ausreichend ist. Hinsichtlich der Auswirkung auf die Klimaveränderung haben die beiden TPU der erfindungsgemäßen Beispiele 2 und 4 jeweils einen deutlichen Vorteil gegenüber den TPU der nicht erfindungsgemäßen Beispiele 1 und 3, was an dem deutlich geringeren Wert [kg CO₂-eq/kg TPU] zu erkennen ist.

Die TPU der Beispiele 5 bis 8 mit einer Shore A Härte von ca. 85 sind aufgrund der langsameren Verfestigungsgeschwindigkeit eher für Extrusionsanwendungen geeignet. Aber auch dabei spielen die mechanischen Eigenschaften eine wichtige Rolle, und die TPU der Beispiele 5 bis 8 können dieser Forderung gerecht werden. Das TPU des erfindungsgemäßen Beispiels 8 hat hinsichtlich der Auswirkung auf die Klimaveränderung deutliche Vorteile gegenüber den TPU der nicht erfindungsgemäßen Beispiele 6 und 7. Das TPU des nicht erfindungsgemäßen Beispiels 5 liegt hinsichtlich der Auswirkung auf die Klimaveränderung zwar auf gleichem Niveau wie das TPU des erfindungsgemäßen Beispiels 8, hat jedoch eine deutlich schlechtere Reißfestigkeit.

## Patentansprüche

1. Kurzlebige Konsumgüter, die thermoplastische Polyurethane enthalten, welche aus A) Diisocyanaten, B) Polyolen, C) Kettenverlängerern und gegebenenfalls D) monofunktionellen Kettenabbrechern in Gegenwart von gegebenenfalls E) Katalysatoren, F) Oxidations- und Lichtstabilisatoren und G) Zusatzstoffen und/oder Hilfsmitteln erhältlich sind,
wobei die Polyole (B) mindestens ein Polyethercarbonatpolyol enthalten, welches durch Copolymerisation von Alkylenoxiden mit Kohlendioxid in Gegenwart von Doppelmetallcyanid-Katalysatoren (DMC-Katalysatoren) erhältlich ist.

2. Konsumgüter gemäß Anspruch 1, wobei das thermoplastische Polyurethan erhältlich ist aus der Reaktion
A) mindestens einer Isocyanatkomponente ausgewählt aus der Gruppe bestehend aus aliphatischen, cycloaliphatischen und aromatischen Diisocyanaten,
B) mindestens einer Polyolkomponente, bestehend aus
b1) 100 bis 5 Mol-% mindestens eines Polyethercarbonatdiols mit einem Molekulargewicht von 500 bis 6000 g/mol, erhältlich durch Copolymerisation von Alkylenoxiden mit Kohlendioxid in Gegenwart von Doppelmetallcyanid-Katalysatoren (DMC-Katalysatoren),
b2) 0 bis 95 Mol-% mindestens eines Polyols ausgewählt aus der Gruppe bestehend aus Polyester-, Polyether-, Polycaprolacton- und Polycarbonatdiolen mit zahlenmittleren Molekulargewichten von 500 bis 8000 g/mol,
C) mindestens einer Kettenverlängererkomponente ausgewählt aus der Gruppe bestehend aus kurzkettigen Diolen, Hydroxyaminen und Diaminen mit zahlenmittleren Molekulargewichten von 62 bis 490 g/mol,
D) gegebenenfalls monofunktionellen Kettenabbrechern,
in Gegenwart von
E) gegebenenfalls Katalysatoren,
F) gegebenenfalls Oxidations- und Lichtstabilisatoren,
G) gegebenenfalls weiteren Zusatzmitteln und/oder Hilfsstoffen"
wobei das Verhältnis der Isocyanatgruppen aus A) zu den gegenüber Isocyanatengruppen reaktiven Gruppen aus B), C) und D) 0,9:1 bis 1,1:1 beträgt.

3. Konsumgüter gemäß Anspruch 2, wobei die Komponente b2) mindestens ein Polyesterpolyol enthält, erhältlich aus der Reaktion mindestens einer Dicarbonsäure ausgewählt aus der Gruppe bestehend aus Bernsteinsäure, Maleinsäure, Adipinsäure, Sebazinsäure, Dodecandisäure und Terephthalsäure mit mindestens einem Diol ausgewählt aus der Gruppe bestehend aus Ethylenglykol, Diethylenglykol, 1,3-Propandiol, 2,2-Dimethyl-1,3-Propandiol, 1,4-Butandiol, 1,5-Pentandiol, 1,6-Hexandiol, 1,8-Octandiol und 1,10-Decandiol.

4. Konsumgüter gemäß Anspruch 2, wobei die Komponente b2) mindestens ein Polycaprolactondiol enthält.

5. Konsumgüter gemäß Anspruch 2, wobei die Komponente b2) mindestens ein Polyetherpolyol enthält, erhältlich durch Polymerisation mindestens eines Alkylenoxids ausgewählt aus der Gruppe bestehend aus Ethylenoxid, Propylenoxid, 1,2-Butylenoxid und 2,3-Butylenoxid.

6. Konsumgüter gemäß Anspruch 2, wobei die Komponente b2) mindestens ein Polyetherpolyol enthält, erhältlich durch Polymerisation von Tetrahydrofuran.

7. Konsumgüter gemäß Anspruch 2, wobei die Komponente b2) mindestens ein Polycarbonatdiol enthält, erhältlich aus der Reaktion mindestens eines Diols ausgewählt aus der Gruppe bestehend aus 1,4-Butandiol, 1,5-Pentandiol, 3-Methyl-1,5-pentandiol und 1,6-Hexandiol mit mindestens einem Carbonat ausgewählt aus der Gruppe bestehend aus Dimethylcarbonat und Diphenylcarbonat.

8. Verwendung von thermoplastischen Polyurethanen, welche aus A) Diisocyanaten, B) Polyolen, C) Kettenverlängerern und gegebenenfalls D) monofunktionellen Kettenabbrechern in Gegenwart von gegebenenfalls E) Katalysatoren, F) Oxidations- und Lichtstabilisatoren und G) Zusatzstoffen und Hilfsmitteln herstellbar sind, wobei die Polyole (B) mindestens ein Polyethercarbonatpolyol enthalten, erhältlich durch Copolymerisation von Alkylenoxiden mit Kohlendioxid unter Katalyse mit Doppelmetallcyanid-Katalysatoren (DMC-Katalysatoren), zur Herstellung von kurzlebigen Konsumgütern.

9. Verwendung gemäß Anspruch 8, wobei die thermoplastischen Polyurethane erhältlich sind aus der Reaktion
A) mindestens einer Isocyanatkomponente ausgewählt aus der Gruppe bestehend aus aliphatischen, cycloaliphatischen und aromatischen Diisocyanaten,
B) mindestens einer Polyolkomponente bestehend aus
b1) 100 bis 5 Mol-% mindestens eines Polyethercarbonatdiols mit einem zahlenmittleren Molekulargewicht von 500 bis 6000 g/mol, erhältlich durch Copolymerisation von Alkylenoxiden mit Kohlendioxid unter Katalyse mit Doppelmetallcyanid-Katalysatoren (DMC-Katalysatoren),
b2) 0 bis 95 Mol-% mindestens eines Polyols ausgewählt aus der Gruppe bestehend aus Polyester-, Polyether-, Polycaprolacton- und Polycarbonatdiolen mit zahlenmittleren Molekulargewichten von 500 bis 8000 g/mol,
C) mindestens einer Kettenverlängererkomponente ausgewählt aus der Gruppe bestehend aus kurzkettigen Diolen, Hydroxyaminen und Diaminen mit zahlenmittleren Molekulargewichten von 62 bis 490 g/mol,
D) gegebenenfalls monofunktionellen Kettenabbrechern,
in Gegenwart von
E) gegebenenfalls Katalysatoren,
F) gegebenenfalls Oxidations- und/oder Lichtstabilisatoren,
G) gegebenenfalls weiteren Zusatzmitteln und/oder Hilfsstoffen,
wobei das Verhältnis der Isocyanatgruppen aus A) zu den gegenüber Isocyanatengruppen reaktiven Gruppen aus B), C) und D) 0,9:1 bis 1,1:1 beträgt.

10. Verwendung gemäß Anspruch 8 zur Herstellung von Freizeit- und Sportbekleidung und - schuhen.
